# EUROPEAN PATENT APPLICATION

(11) **EP 3 228 536 A1**
(43) Date of publication of application: **11.10.2017**
(21) Application number: 17165276.1
(22) Date of filing: 06.04.2017
(51) Int. Cl.: B64C 1/40, G10K 11/168

(54) **COMPOSITE INSULATION FOR REDUCING BROADBAND AIRCRAFT NOISE**

(30) Priority: 08.04.2016 US 201615094233
(71) Applicant: Harman International Industries, Incorporated, Stamford, CT 06901 (US)
(72) Inventor: BUTTS, Donald Joseph, Stamford, CT 06901 (US); SUKO, Todd, Stamford, CT 06901 (US)
(74) Representative: Grünecker Patent- und Rechtsanwälte PartG mbB

(57) **Abstract**

A composite insulation is included between the skin of an aircraft and interior trim panels. The composite insulation includes multiple layers of micro-perforate material interspersed with layers of semi-rigid material. For a given thickness, the composite insulation provides superior transmission loss over a wide range of frequencies, including low frequencies, compared to conventional homogeneous insulation having the same thickness. Thus, the composite insulation reduces broadband noise within the cabin of an aircraft more effectively compared to conventional insulation.

## Description

### BACKGROUND

### Field of the Disclosed Embodiments

The disclosed embodiments relate generally to acoustic insulation and, more specifically, to composite insulation for reducing broadband aircraft noise.

### Description of the Related Art

An aircraft typically includes one or more engines that provide thrust. The engines may be propeller engines or jet turbines. In either case, the engines generally induce vibrations that travel throughout the skin and structure of the aircraft. The vibrations may also propagate into the cabin of the aircraft and travel through the cabin as sound waves. Typically, this form of sound is referred to as "engine noise." Engine noise can be very loud and, thus, may cause passengers to experience auditory discomfort. Aircraft may also be subject to other types of noise capable of causing auditory discomfort for passengers, including noise generated by landing gear during takeoff and landing, noise associated with various aeroacoustic effects, and so forth. Accordingly, aircraft manufacturers typically fabricate aircraft to include some form of acoustic insulation that reduces the amplitude of noise within the aircraft cabin.

One drawback associated with conventional acoustic insulation is that only certain frequencies of sound can be reduced in amplitude. In particular, conventional acoustic insulation may only reduce the amplitude of higher frequency sounds, allowing lower frequency sounds to penetrate the aircraft cabin. Low frequency sounds can be particularly annoying to aircraft passengers, especially over long periods of time. Another drawback of conventional acoustic insulation is that the only way to enhance the effectiveness of conventional insulation is to increase the thickness and/or increase the mass of the insulation. However, due to space and weight restrictions associated with aircraft, these approaches are typically undesirable or not feasible.

As the foregoing illustrates, acoustic insulation that is more effective in reducing noise within aircraft would be useful.

### SUMMARY

One or more embodiments set forth include a composite insulation configured to reduce the amplitude of broadband vibrations, including a first micro-perforate layer that includes a first plurality of perforations and is configured to absorb broadband sound energy, and a first semi-rigid layer that is coupled to the first micro-perforate layer and is configured to provide structural support to the first micro-perforate layer and to absorb broadband sound energy.

At least one advantage of the disclosed embodiments is that the cabin of an aircraft can be insulated from unwanted noise, including engine noise, thereby reducing noise-related discomfort of aircraft passengers and improving the flying experience for those passengers.

### BRIEF DESCRIPTION OF THE SEVERAL VIEWS OF THE DRAWINGS

So that the manner in which the recited features of the one more embodiments set forth above can be understood in detail, a more particular description of the one or more embodiments, briefly summarized above, may be had by reference to certain specific embodiments, some of which are illustrated in the appended drawings. It is to be noted, however, that the appended drawings illustrate only typical embodiments and are therefore not to be considered limiting of its scope in any manner, for the scope of the disclosed embodiments subsumes other embodiments as well.
Figure 1 illustrates an aircraft configured to reduce broadband noise within the aircraft cabin, according to various embodiments;
Figure 2 illustrates a portion of the aircraft of Figure 1 that includes composite insulation designed to reduce broadband noise, according to various embodiments;
Figure 3 is a more detailed illustration of the composite insulation of Figure 2, according to various embodiments;
Figure 4 is a cross section of a portion of the composite insulation of Figure 3, according to various embodiments;
Figure 5 sets forth a graph comparing transmission losses of the composite insulation of Figures 2-4 to transmission losses of a conventional insulation over a range of frequencies, according to various embodiments; and
Figure 6 sets forth a graph showing a noise signature measured within the cabin of an aircraft, according to various embodiments.

### DETAILED DESCRIPTION

In the following description, numerous specific details are set forth to provide a more thorough understanding of certain specific embodiments. However, it will be apparent to one of skill in the art that other embodiments may be practiced without one or more of these specific details or with additional specific details.

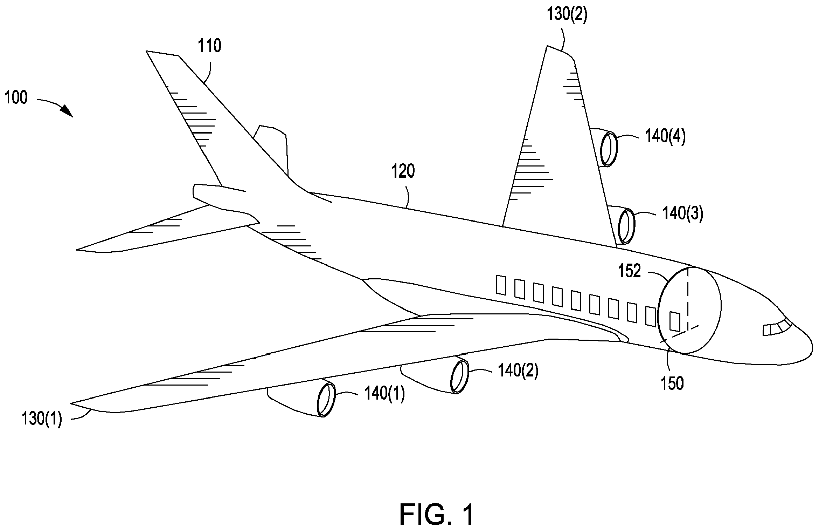

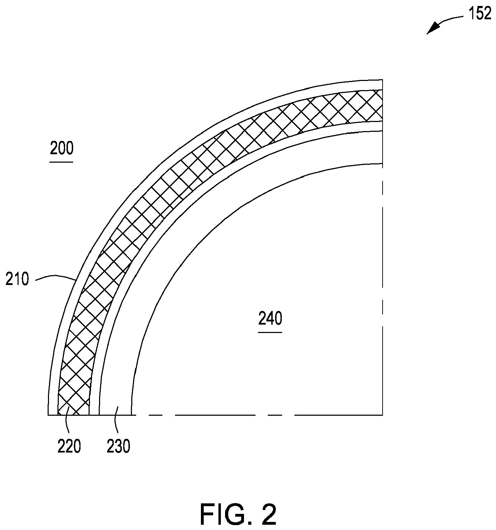

Figure 1 illustrates an aircraft configured to reduce broadband noise within the aircraft cabin, according to various embodiments. As shown, an aircraft 100 includes a tail section 110, a fuselage 120, and wings 130(1) and 130(2), coupled together. A set of engines 140 is coupled to each wing 130. Engines 140(1) and 140(2) are coupled to wing 130(1), and engines 140(3) and 140(4) are coupled to wing 130(2). A cross section 150 may be taken at any position along fuselage 120. A portion 152 of cross section 150 includes composite insulation that is described in greater detail below in conjunction with Figure 2.

During taxi, takeoff, cruise, and landing, engines 140 provide thrust that propels aircraft 100 forward. In doing so, engines 140 generate vibrations that travel throughout tail section 110, fuselage 120, and wings 130 of aircraft 100. Aircraft 100 may also be subject to other forms of vibration, including, for example and without limitation, vibrations caused by landing gear rolling over a runway, vibrations induced by wing flutter or boundary layer fluctuations, weather-related vibrations, vibrations caused by machinery, and so forth.

To mitigate these vibrations, aircraft 100 is configured to include a composite insulation that is capable of reducing the magnitude of broadband vibrations traveling through the skin and structure of aircraft 100. The composite insulation is generally included between the skin of aircraft 100 and interior trim panels. The arrangement of the composite insulation within portion 152 of cross section 150 is described below in conjunction with Figure 2.

Figure 2 illustrates a portion of the aircraft of Figure 1 that includes composite insulation designed to reduce broadband noise, according to various embodiments. As shown, portion 152 of cross section 150 includes various layers that separate an external environment 200 from a cabin interior 240 of aircraft 100. Those layers include an aircraft skin 210, composite insulation 220 mentioned above in conjunction with Figure 1, and interior trim panels 230.

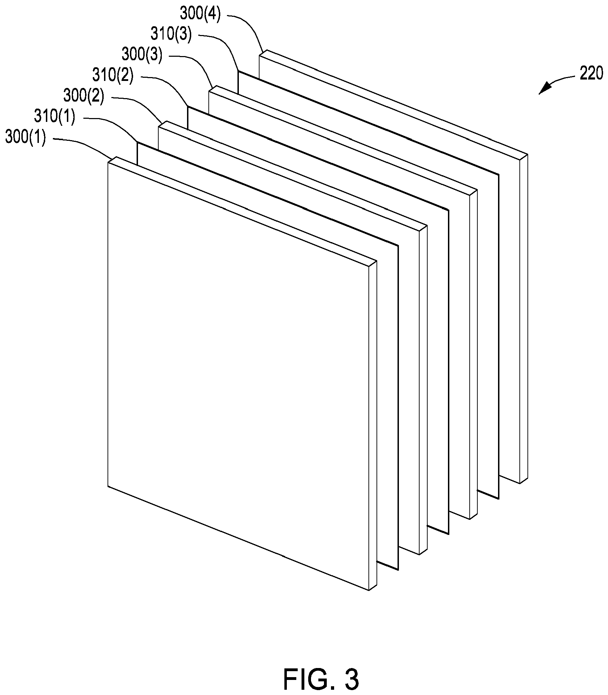

Composite insulation 220 is a multi-layered form of acoustic insulation that includes one or more semi-rigid layers and one or more micro-perforate layers. These different layers increase the transmission loss of broadband vibrations that may be propagated via aircraft skin 210 and/or other portions of aircraft 100. Although discussed in conjunction with aircraft 100, which is depicted in Figure 1 as a commercial airplane, composite insulation 220 is capable of mitigating vibrations in any technically feasible context. The multi-layered structure of composite insulation 220 is described in greater detail below in conjunction with Figure 3.

Figure 3 is a more detailed illustration of the composite insulation of Figure 2, according to various embodiments. As shown, composite insulation 220 includes semi-rigid layers 300 interspersed with micro-perforate layers 310. Semi-rigid layers 300 generally provide structural support to adjacent micro-perforate layers 310. Semi-rigid layers 300 and micro-perforate layers 310 may be sandwiched together and sealed within an enclosing envelope and/or coupled together via any technically feasible form of adhesive or other type of binding mechanism. Composite insulation 220 may include any number of semi-rigid layers 300 and micro-perforate layers 310, and the number of those layers may be adjusted to change the acoustic insulating characteristics of composite insulation 220.

A given semi-rigid layer 300 may be composed of a wide variety of different semi-rigid materials, including, for example and without limitation, felt, Nomex® felt, melamine foam, and so forth. Each semi-rigid layer 300 may also include a thin protective layer that provides protection from fluid intrusion, such as, for example and without limitation, a plastic laminate applied to each semi-rigid layer 300. This protective layer may be applied to either one of, or both sides of each semi-rigid layer 300.

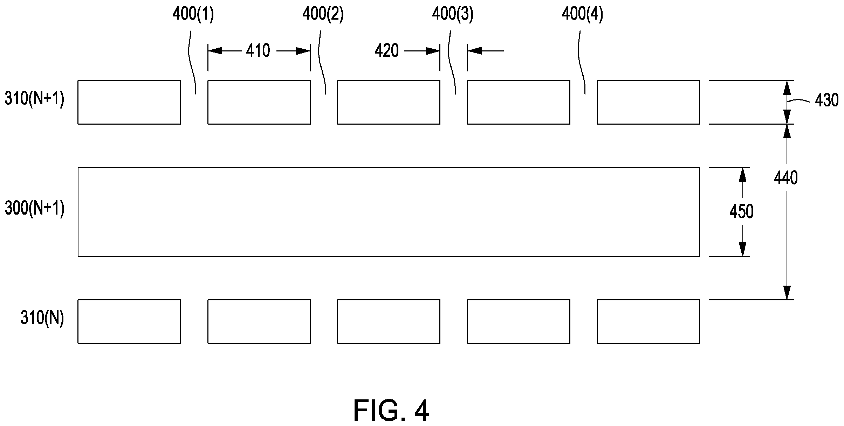

A given micro-perforate layer 310 may be composed of a wide variety of different materials configured to include micro-perforations, including, for example and without limitation, plastic, fiberglass, and so forth. Each micro-perforate layer 310 includes multiple perforations having specific dimensions. The dimensions of these perforations, and other dimensions associated with the layers of composite insulation 220, may be adjusted in order to change the transmission loss characteristics of composite insulation 220. Exemplary dimensions for these layers are described in greater detail below in conjunction with Figure 4.

Figure 4 is a cross section of a portion of the composite insulation of Figure 3, according to various embodiments. As shown, a semi-rigid layer 300(N+1) is disposed between micro-perforate layers 310(N) and 310(N+1). Micro-perforate layers 310 include a number of perforations 400. For example, and without limitation, micro-perforate layer 310(N+1) includes perforations 400(1) through 400(4).

A given perforation 400 is separated from an adjacent perforation 400 by a perforation separation distance 410. Each perforation 400 has a perforation width 420. Perforations 400 may have any technically feasible shape. For example, and without limitation, a given perforation 400 may have a circle, square, oval, ellipse, or diamond shape, among other possibilities. Each possible shape may have a specific set of dimensions, although for simplicity only perforation width 420 is shown.

Micro-perforate layers 310 have a thickness 430 and are separated from one another by a micro-perforate layer separation distance 440. Semi-rigid layer 300(N+1) has a thickness 450 that, generally, is less than or equal to micro-perforate layer separation distance 440.

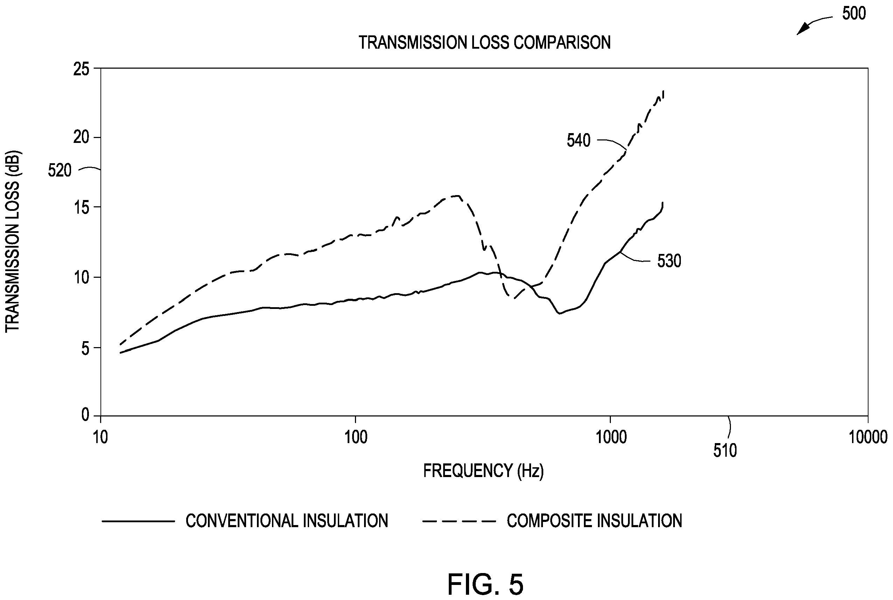

The various dimensions shown may be adjusted in order to alter the transmission characteristics of composite insulation 220. In addition, each layer of composite insulation 220 may be dimensioned differently compared to other layers in order to effect specific transmission characteristics. In one embodiment, the dimensions shown in Figure 4 are set in order to cause the layers of composite insulation 220 to have resonances at specific frequencies. Those frequencies may fall outside of the range of human hearing. Alternatively, aircraft 100 may not generate those frequencies with significant magnitudes, and so those frequencies may not contribute significantly to noise propagated into the cabin of aircraft 100. The transmission characteristics of composite insulation 220 are described in greater detail below in conjunction with Figure 5.

Figure 5 sets forth a graph comparing transmission losses of the composite insulation of Figures 2-4 to transmission losses of a conventional insulation over a range of frequencies, according to various embodiments. As shown, graph 500 includes X-axis 510 and Y-axis 520, which correspond to frequency in Hertz (Hz) and transmission loss in decibels (dB), respectively. Graph 500 also includes plot 530 showing the transmission loss of conventional insulation having a given thickness, as well as plot 540 showing the transmission loss of composite insulation 220 having that same thickness. Plot 540 illustrates that, for the same thickness, composite insulation 220 offers superior acoustic insulation properties over a wider range of frequencies compared to conventional insulation. Importantly, composite insulation 220 provides superior transmission loss over lower frequencies compared to conventional insulation, including 10-500 Hz, as is shown. Generally, composite insulation 220 provides this transmission loss by absorbing sound energy as opposed to allowing that sound energy to be transmitted.

In one embodiment, plot 530 reflects a homogeneous material that obeys the Acoustic Mass Law, which is well known in the art. Accordingly, conventional insulation associated with plot 530 provides at most 6 dB of transmission loss per octave. By contrast, composite insulation 220 associated with plot 540 offers 80% more transmission loss compared to conventional insulation. Again, plots 530 and 540 reflect conventional insulation and composite insulation, respectively, having the same thickness.

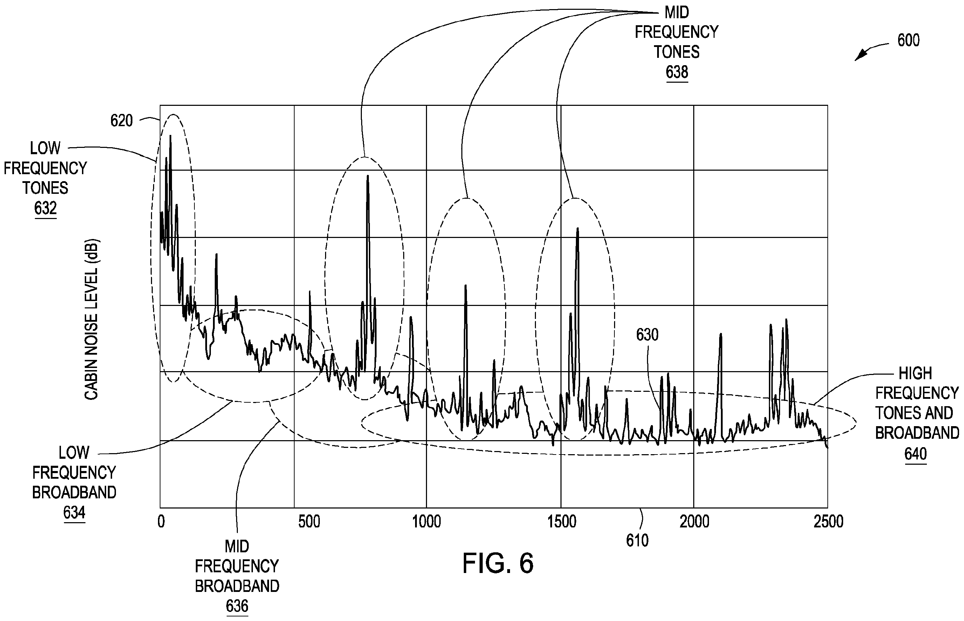

Figure 6 sets forth a graph showing a noise signature measured within the cabin of an aircraft, according to various embodiments. The noise signature shown corresponds to a helicopter, although some portions of that noise signature may be similar to a noise signature associated with a propeller plane or other aircraft. As shown, a graph 600 includes X-axis 610 and Y-axis 620, which correspond to frequency in Hertz (Hz) and cabin noise level in decibels (dB), respectively. Graph 600 also includes a plot 630 showing the cabin noise level across a range of frequencies, from 0 to 2500 Hz. Plot 630 is divided into different regions that correspond to different noise sources, including low frequency tones 632, low frequency broadband 634, mid frequency broadband 636, mid frequency tones 638, and high frequency tones and broadband 640.

Low frequency tones 632 may correspond to frequencies associated with the main rotor and/or tail rotor of a helicopter or the propeller of a propeller airplane. Low frequency broadband 634 may correspond to frequencies associated with airflow noise including turbulence and boundary layer effects, harmonics of rotor or propeller tones, and/or engine frequencies. Mid frequency broadband 636 may correspond to higher frequencies of airflow noise, as well as higher harmonics of rotor or propeller tones. Mid frequency tones 638 includes higher decibel tones falling within the frequency ranges of mid frequency broadband 636 and high frequency tones and broadband 640, and generally includes gear mesh frequencies and/or accessory frequencies. High frequency tones and broadband 640 includes high frequency airflow noise and harmonics of mechanical components.

Referring generally to Figures 5-6, composite insulation 220 shown in Figures 2-4 is configured to provide transmission loss across low frequency tones 632, low frequency broadband 634, and mid frequency broadband 636 within the cabin of an aircraft. Composite insulation 220 generally provides greater transmission loss across those frequencies compared to conventional insulation. Composite insulation 220 is also capable of providing elevated transmission loss at higher frequencies, including mid frequency tones 638 and high frequency tones and broadband 640, compared to conventional insulation.

Conventional insulation typically targets frequencies above 1 kHz, and therefore may be suited primarily for high frequency tones and broadband 640. In order to target lower frequencies, the thickness of conventional insulation must be increased. However, due to space and weight restrictions, the thickness of conventional insulation can only be increased by a limited amount. Therefore, conventional insulation cannot increase transmission loss at frequencies below 1 kHz as effectively and efficiently as composite insulation 220. As described, composite insulation 220 is capable of targeting low frequency noise without significantly increasing thickness by simply adding layers. That low frequency noise may include rotor and propeller harmonics, engine noise, as well as airflow noise such as that mentioned above.

Referring generally to Figures 1-6, persons skilled in the art will understand that the composite insulation disclosed herein may be included within any technically feasible structure in order to reduce unwanted broadband vibrations. Such structures may include static structures, dynamic structures, as well as transportation means, among other possibilities. For example, and without limitation, the composite insulation could be included within static structures such as buildings, walls, barricades, and cargo containers, dynamic structures such as windmills and hydroelectric dams, and transportation means, such as airplanes, helicopters, ships, boats, vehicles, and so forth. Structures configured to include the composite insulation may also include machinery that generates unwanted broadband vibrations. In general, the disclosed composite insulation may be integrated within a structure between an outer layer of the structure and an interior layer of the structure. However, persons skilled in the art will understand that other placement options are also possible.

In sum, a composite insulation is included between the skin of an aircraft and interior trim panels. The composite insulation includes multiple layers of micro-perforate material interspersed with layers of semi-rigid material. For a given thickness, the composite insulation provides superior transmission loss over a wide range of frequencies, including low frequencies, compared to conventional homogeneous insulation having the same thickness. Thus, the composite insulation reduces broadband noise within the cabin of an aircraft more effectively compared to conventional insulation.

Advantageously, the cabin of an aircraft can be insulated from unwanted noise, including engine noise, thereby reducing noise-related discomfort of aircraft passengers and improving the flying experience for those passengers. Additionally, the number of layers of the composite insulation, and various dimensions of that insulation, can be adjusted to increase the transmission loss at specific frequencies. Thus, the composite insulation can be customized to fit a range of different use-cases.

The descriptions of the various embodiments have been presented for purposes of illustration, but are not intended to be exhaustive or limited to the embodiments disclosed. Many modifications and variations will be apparent to those of ordinary skill in the art without departing from the scope and spirit of the described embodiments.

While the preceding is directed to embodiments of the present disclosure, other and further embodiments of the disclosure may be devised without departing from the basic scope thereof, and the scope thereof is determined by the claims that follow.

## Claims

1. A composite insulation configured to reduce the amplitude of broadband vibrations, comprising:
a first micro-perforate layer that includes a first plurality of perforations and is configured to absorb broadband sound energy; and
a first semi-rigid layer that is coupled to the first micro-perforate layer and is configured to provide structural support to the first micro-perforate layer and to absorb broadband sound energy.

2. The composite insulation of claim 1, wherein the first micro-perforate layer is comprised of a plastic material or a fiberglass material.

3. The composite insulation of claim 1 or 2, wherein the first semi-rigid layer is comprised of a felt material or a foam material.

4. The composite insulation of one of claims 1-3, wherein the first semi-rigid layer includes a laminate layer configured to prevent fluid intrusion.

5. The composite insulation of one of claims 1-4, further comprising:
a second micro-perforate layer that includes a second plurality of perforations and is configured to absorb broadband sound energy; and
a second semi-rigid layer that is coupled to both the first micro-perforate layer and to the second micro-perforate layer and is configured to provide structural support to both the first micro-perforate layer and to the second micro-perforate layer and to absorb broadband sound energy.

6. The composite insulation of one of claims 1-5, wherein the first micro-perforate layer and the first semi-rigid layer are disposed within an aircraft between a skin layer of the aircraft and an interior trim panel of the aircraft.

7. The composite insulation of one of claims 1-6, wherein the composite insulation provides greater transmission loss over a range of frequencies compared to a homogeneous insulation.

8. The composite insulation of claim 7, wherein the composite insulation and the homogeneous insulation have equal thickness.

9. The composite insulation of claim 7 or 8, wherein the composite insulation provides greater transmission loss compared to the homogeneous insulation by absorbing a greater amount of broadband sound energy over the range of frequencies than the homogeneous insulation.

10. The composite insulation of one of claims 7-9, wherein the range of frequencies comprises 10 Hertz to 500 Hertz.

11. A structure, comprising:
an outer layer;
an inner layer; and
an insulation layer disposed between the outer layer and the layer, comprising:
a first micro-perforate layer that includes a first plurality of perforations and is configured to absorb broadband sound energy, and
a first semi-rigid layer that is coupled to the first micro-perforate layer and is configured to provide structural support to the first micro-perforate layer and to absorb broadband sound energy.

12. The structure of claim 11, wherein the outer layer transmits broadband sound energy into the insulation layer with a first amplitude, and the insulation layer transmits broadband sound energy into the inner layer with a second amplitude, wherein the first amplitude is greater than the second amplitude.

13. The structure of claim 12, wherein the inner layer surrounds at least a portion of an internal region within the structure that is configured to carry passengers, and wherein the passengers are subjected to broadband sound energy having at most the second amplitude.

14. The structure of one of claims 11-13, wherein the structure comprises an aircraft that includes one or more engines configured to generate broadband sound energy or comprises a building that includes machinery configured to generate broadband sound energy.

15. The structure of claim 14, wherein the outer layer comprises a skin layer of the aircraft, and the inner layer comprises an interior trim panel of the aircraft.
